(19) **Europäisches Patentamt**
**European Patent Office**
**Office européen des brevets**

(11) **EP 2 488 829 B1**

(12) **EUROPEAN PATENT SPECIFICATION**

(45) Date of publication and mention
of the grant of the patent:
**14.12.2016  Bulletin 2016/50**

(51) Int Cl.:
***G01C 21/16*** *(2006.01)*   ***G01C 25/00*** *(2006.01)*

(21) Application number: **10768691.7**

(86) International application number:
**PCT/EP2010/006245**

(22) Date of filing: **13.10.2010**

(87) International publication number:
**WO 2011/045032 (21.04.2011 Gazette 2011/16)**

(54) **A METHOD OF DETECTING PARASITIC MOVEMENTS WHILE ALIGNING AN INERTIAL UNIT**

VERFAHREN ZUR ERFASSUNG VON PARASITÄREN BEWEGUNGEN BEI DER AUSRICHTUNG EINER INERTIALEINHEIT

PROCÉDÉ DE DÉTECTION DE MOUVEMENTS PARASITES PENDANT L'ALIGNEMENT D'UNE UNITÉ INERTIELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.10.2009  FR 0904947**
**10.03.2010  US 312504 P**

(43) Date of publication of application:
**22.08.2012  Bulletin 2012/34**

(73) Proprietor: **Safran Electronics & Defense**
**92100 Boulogne-Billancourt (FR)**

(72) Inventors:
• **ROSELLINI, Lionel**
**F-92100 BOULOGNE-BILLANCOURT (FR)**
• **FOLOPPE, Yannick**
**F-92100 BOULOGNE-BILLANCOURT (FR)**

(74) Representative: **Lavialle, Bruno François Stéphane et al**
**Cabinet Boettcher**
**16, rue Médéric**
**75017 Paris (FR)**

(56) References cited:
**FR-A1- 2 925 670**

**Description**

**Field of the invention**

The present invention relates to a method of detecting parasitic movements while aligning an inertial unit.

**Background of the invention**

An inertial unit generally comprises a processor unit connected to sensors, such as accelerometers and gyros, placed on axes of a predetermined frame of reference in order to measure linear movements parallel to said axes and angular movements about said axes. The processor unit includes a navigation module for determining an attitude on the basis of the signals delivered by the sensor and it generally implements a Kalman filter in order to eliminate errors affecting the measurements of the sensors.

The use of an inertial unit is preceded by an operation of aligning the unit, during which the inertial unit needs to detect the vertical by measuring acceleration, and to determine the direction of North by measuring terrestrial rotation. During this operation, and in the absence of other information such as information of the global positioning system (GPS), speedometer, odometer, .... type, the inertial unit needs to be completely stationary so as to avoid disturbing the measurements that serve to initialize navigation calculations.

It is found, more particularly with portable inertial units, that the inertial unit cannot be kept completely stationary throughout the time required for the alignment operation (even if it is placed directly on the ground or on a tripod, e.g. when the ground itself is loose). It is therefore necessary to detect these movements, either to take them into account for alignment purposes, or else to provide the user with an indication of the validity of measurement conditions, or indeed to request better stabilization of the inertial unit prior to restarting alignment. Four types of parasitic movements can be identified: movements of large amplitude and short duration (also known as short-term movement); movements of large amplitude and long duration (also known as long-term movement); movements of small amplitude and short duration; and movements of small amplitude and long duration.

There is no particular problem in detecting movements of the first three types and this is already handled in the state of the art, as described for example in the document FR 2925670 A1. For example, detecting short-term and long-term movements of large amplitude is done by using the measurements of the accelerometers, possibly after filtering, and by comparing the measurements with thresholds. The thresholds are defined as a function of sensor noise and of the performance desired for detection. Detecting short-term movements of small amplitude is performed by monitoring certain parameters of the Kalman filter. For example, it is possible to compare innovation in the state of the Kalman filter during a measurement with thresholds that reveal such movements. These thresholds are defined as a function of the covariance of the innovation, as calculated by the Kalman filter, itself set as a function of the performance of the sensors.

In contrast, it is difficult to detect movements of the fourth type since the order of magnitude of these movements is comparable to the order of magnitude of sensor errors.

Methods exist that make use of a plurality of Kalman filters and that enable movements to be detected that have durations that are of short to medium length. Those methods are very expensive in terms of calculation and they are found to be relatively ineffective with movements of the fourth type.

**Object and summary of the invention**

An object of the invention is to provide a method that is simple and reliable for detecting movements of small amplitude and long duration, and without requiring any particular additional equipment.

To this end, the invention provides a method of detecting parasitic movements while aligning an inertial unit that comprises a navigation unit connected to accelerometer and angle sensors placed in a predetermined frame of reference, the method comprising the steps of:

- integrating the signals from the sensors, in a frame of reference that is turning in an orientation that can be detected by the accelerometer and angle sensors, in order to obtain a raw position signal during a predetermined duration;
- recording the raw position signal during said predetermined duration;
- determining the parameters of a theoretical signal modeling the raw position signal as a function of a predetermined error model in the absence of movement so that the theoretical signal, along each axis as a function of time, is modeled by a polynomial function;
- calculating a residual signal between the theoretical modeling signal and the raw position signal; and
- identifying a parasitic movement when the residual signal overshoots a predetermined limit threshold.

Thus, residues are calculated a posteriori between the modeling signal and the position signal obtained by double integration of the signals from the accelerator and angle sensors. These residues are used to determine whether parasitic movements have taken place during at least a portion of the duration of the alignment operation.

Preferably, the parameters are determined from the raw position signal by using a least-squares method.

This method of adjustment is simple and effective.

Also preferably, the determined parameters are compared with likelihood thresholds that are established as a function of the performance of the sensors.

The likelihood thresholds take account of the detectability limits of the sensors. This makes it possible to identify a movement that might have an influence on the position and that might have the same signature as a sensor error.

In an advantageous implementation, the threshold is also calculated to take account of a standard deviation value for the noise of the accelerometer and angle sensors, and preferably, the threshold is equal to six times the standard deviation value.

A threshold proportional to the theoretical standard deviation of the residual signal enables parasitic movements to be detected effectively and makes it possible to quantify the probability of false alarms. In particular by using the error model of the sensor, the standard deviation value of the residual signal is calculated a priori as a function of the time that has elapsed since the beginning of modeling. It then suffices to compare the residual signal with the standard deviation values as calculated in this way since the beginning of modeling in order to identify an anomaly in the residual signal and thus detect a parasitic movement.

Also advantageously, the method includes the step of filtering the raw position signal prior to modeling in order to eliminate therefrom components having a frequency greater than a predetermined maximum threshold.

High-frequency vibration of small amplitude that does not disturb the alignment operation could give rise to false alerts when detecting movements. This filtering enables that risk to be eliminated.

Preferably, identification takes account of a number of times the limit threshold is overshot by the residual signal.

This amounts to detecting a parasitic movement when some predetermined number of residues overshoot the predetermined threshold during a predetermined length of time. This characteristic makes it possible to avoid a false detection of movement when overshooting of the thresholds is due merely to adding together all of the sensor noise or to a movement that is very localized in time. However such circumstances are rare.

Other characteristics and advantages of the invention appear on reading the following description of a particular and non-limiting implementation of the invention, as defined in the appended claims.

## Brief description of the drawing

Reference is made to the accompanying drawing, in which:

- Figure 1 is a diagrammatic of an inertial unit; and
- Figure 2 is a diagram comparing the residual signal with the predetermined threshold, with time being plotted along the abscissa and distance up the ordinate.

## More detailed description

The inertial unit for implementing the method in accordance with the invention comprises a processor unit 1 having a navigation module 2 and a Kalman filter 3, and it is connected to sensors 4 and to a user interface 5.

The sensors 4 comprise accelerometers and gyros (free gyros or rate gyros) disposed on the axes X, Y, and Z of a frame of reference for delivering signals S1 and S2 representative respectively of an acceleration along each of these axes and of a speed of rotation about each of these axes.

The navigation unit 2 is arranged to integrate the signals S1 and S2 so as to measure linear and angular movements relative to said axes and so as to provide position signals $\underline{x}$ and $\underline{y}$.

The Kalman filter 3 uses the position signals $\underline{x}$ and $\underline{y}$ for estimating the attitude errors, the bias, and the drifts of each of the sensors.

In nominal mode, the operation of the inertial unit is conventional.

However, nominal mode is preceded by an alignment operation in which the method of the invention is implemented for detecting parasitic movements. This method is particularly intended for detecting movements of small amplitude and long duration. Movements of large amplitude and short or long duration, and movements of small amplitude and short duration are detected by conventional methods (respectively from the signals S1, S2 and from the parameters of the Kalman filter).

The method of the invention begins by double integration of the acceleration signals S1 and S2, projected onto a frame of reference that is turning in compliance with the rotation as measured by the gyros, so as to obtain a raw position signal x' and a raw position signal y' over a predetermined duration. This predetermined duration may be less than or equal to the duration of the alignment. It is also possible to implement the method over one or more time windows during alignment. The time windows may also overlap.

The following step consists in recording the position signals x' and y' for a predetermined duration.

It is known that sensor errors give rise to errors in the measured displacements such that the displacement, dep, along each axis as a function of time can be modeled by a polynomial function of the fourth degree:

$$dep = a_0 + a_1 t + a_2 t^2 + a_3 t^3 + a_4 t^4$$

The terms $a_0$, $a_1$, $a_2$, $a_3$, and $a_4$ are parameters representative of an error, and respectively they concern the initial position, the speed, the acceleration, rotation about the axes X and Y, and rotation about the axis Z.

From this error model, the parameters $a_0$, $a_1$, $a_2$, $a_3$, and $a_4$ are determined (for each axis X, Y) in the theoretical signal that models the raw position signal. These parameters are determined from the raw position signal, e.g. by using a least squares method to adjust the modeling signal to the raw position signal. Once the parameters $a_0$, $a_1$, $a_2$, $a_3$, and $a_4$ have been determined in this way, they are compared with likelihood thresholds that are established as a function of sensor performance.

The following step consists in calculating a residual signal between the modeling signal and the raw position signal.

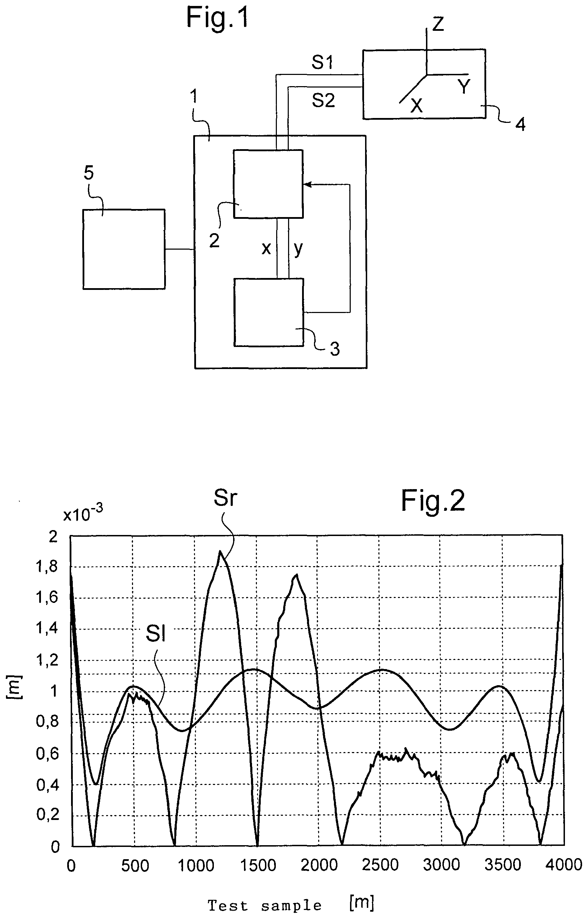

A parasitic movement is identified and an alert is triggered (e.g. in the form of incrementing or displaying an indicator concerning alignment conditions on the user interface 5), whenever the residual signal overshoots a predetermined limit threshold. More precisely, it is the absolute value of the residual signal Sr that is compared with a likely threshold signal Slim as a function of time (see Figure 2). In the preferred implementation, the limit threshold is calculated to take account of a standard deviation value for accelerometer and gyro noise. The sensor error model serves in particular to calculate a priori a value for the standard deviation of the residues as a function of the time that has elapsed since the beginning of the modeling. The threshold signal Slim is representative of a multiple of the standard deviation value as calculated in this way. The multiple that is selected is a result of a compromise between sensitivity in detecting parasitic movements and an acceptable risk of a false alert (when a parasitic movement is detected even though one does not exist). Here the multiple is six.

The identification test takes account of a number of times the limit threshold $S_{lim}$ is overshot by the residual signal Sr. There, the maximum threshold is set at 10. Once more, the choice of a maximum threshold for the number of overshoots is the result of a compromise between sensitivity in detecting parasitic movements and an acceptable risk of a false alert.

Figure 2 thus shows the arrival of a parasitic movement during an alignment operation.

The method here further comprises a prior step of filtering the raw position signal x', y' before modeling in order to eliminate therefrom components having a frequency greater than a predetermined maximum threshold. The predetermined maximum threshold is set so that a risk of low-amplitude high-frequency vibration that does not disturb the alignment operation does not give rise to false alerts in the detection of movements.

Naturally, the invention is not limited to the implementations described but covers any variant coming within the field of the invention as defined by the claims.

In particular, the limit threshold may be constant, the prior filtering may be omitted, mean accelerations over time intervals may be used instead of instantaneous accelerations, ....

Furthermore, the limit threshold may be a multiple of the standard deviation other than six, and the maximum overshoot threshold may be other than one.

**Claims**

1. A method of detecting parasitic movements while aligning an inertial unit that comprises a navigation unit (1, 2) connected to accelerometer and angle sensors (4) placed in a predetermined frame of reference (X,Y, Z), the method comprising the steps of:

   - integrating the signals from the sensors (4), in a frame of reference that is turning in an orientation that can be detected by the accelerometer and angle sensors (4), in order to obtain a raw position signal during a predetermined duration;
   - recording the raw position signal during said predetermined duration;

   **characterized in that** the method further comprises the steps of:

EP 2 488 829 B1

- determining the parameters of a theoretical signal modeling the raw position signal as a function of a predetermined error model in the absence of movement <u>so that the theoretical signal, along each axis as a function of time, is modeled by a polynomial function</u>;
- calculating a residual signal between the theoretical modeling signal (Sr) and the raw position signal;
- identifying a parasitic movement when the residual signal overshoots a predetermined limit threshold (Sl).

2. A method according to claim 1, wherein the parameters are determined from the raw position signal by using a least squares method.

3. A method according to claim 1, wherein the determined parameters are compared with likelihood thresholds that are established as a function of the performance of the sensors.

4. A method according to claim 1, wherein the threshold is calculated to take account of a standard deviation value for the noise of the accelerometer and angle sensors.

5. A method according to claim 4, wherein the threshold is equal to a multiple of the standard deviation value, and in particular is six times the standard deviation value.

6. A methods according to claim 4, wherein the threshold is constant.

7. A method according to claim 4, wherein the threshold varies as a function of time.

8. A method according to claim 1, including the step of filtering the raw position signal prior to modeling in order to eliminate therefrom components having a frequency greater than a predetermined maximum threshold.

9. A method according to claim 1, wherein identification takes account of a number of times the limit threshold is overshot by the residual signal.


**Patentansprüche**

1. Verfahren zum Erfassen parasitärer Bewegungen bei der Ausrichtung einer inertialen Einheit, die eine Navigationseinheit (1, 2) umfasst, die mit Beschleunigungs- und Winkelsensoren (4) verbunden ist, welche in einem vorgegebenen Bezugssystem (X, Y, Z) angeordnet sind, wobei das Verfahren die Schritte umfasst:

- Integrieren der Signale aus den Sensoren (4) in ein Bezugssystem, das sich in einer Ausrichtung dreht, die von den Beschleunigungs- und Winkelsensoren (4) erfasst werden kann, um ein Rohpositionssignal während einer vorgegebenen Dauer zu erhalten;
- Aufzeichnen des Rohpositionssignals während der vorgegebenen Dauer;

**dadurch gekennzeichnet, dass** das Verfahren ferner die Schritte umfasst:

- Bestimmen der Parameter eines theoretischen Signals, welches das Rohpositionssignal in Abhängigkeit eines vorgegebenen Fehlermodells bei fehlender Bewegung modelliert, so dass das theoretische Signal entlang jeder Achse in Abhängigkeit der Zeit durch eine polynominale Funktion modelliert wird;
- Berechnen eines Restsignals zwischen dem theoretischen Modellsignal (Sr) und dem Rohpositionssignal;
- Identifizieren einer parasitären Bewegung, wenn das Restsignal einen vorgegebenen Grenzschwellwert (Sl) überschreitet.

2. Verfahren nach Anspruch 1, wobei die Parameter aus dem Rohpositionssignal unter Verwendung einer Methode der kleinsten Quadrate bestimmt werden.

3. Verfahren nach Anspruch 1, wobei die bestimmten Parameter mit Wahrscheinlichkeitsschwellwerten verglichen werden, die in Abhängigkeit der Leistung der Sensoren festgesetzt werden.

4. Verfahren nach Anspruch 1, wobei der Schwellwert berechnet wird, um einen Standardabweichungswert für das Rauschen der Beschleunigungsund Winkelsensoren zu berücksichtigen.

**5.** Verfahren nach Anspruch 4, wobei der Schwellwert gleich einem Vielfachen des Standardabweichungswertes ist und insbesondere das Sechsfache des Standardabweichungswertes ist.

**6.** Verfahren nach Anspruch 4, wobei der Schwellwert konstant ist.

**7.** Verfahren nach Anspruch 4, wobei der Schwellwert in Abhängigkeit der Zeit variiert.

**8.** Verfahren nach Anspruch 1, umfassend den Schritt des Filterns des Rohpositionssignals vor dem Modellieren, um daraus Komponenten mit einer Frequenz, die größer als ein vorgegebener maximaler Schwellwert ist, zu entfernen.

**9.** Verfahren nach Anspruch 1, wobei die Identifizierung eine Häufigkeit berücksichtigt, mit der der Grenzschwellwert von dem Restsignal überschritten wird.

**Revendications**

**1.** Procédé de détection de mouvements parasites pendant l'alignement d'une unité inertielle qui comprend une unité de navigation (1, 2) connectée à un accéléromètre et à des détecteurs d'angle (4) disposés dans un cadre de référence prédéterminé (X, Y, Z), le procédé comprenant les étapes de :

• intégrer les signaux en provenance des détecteurs (4) dans un cadre de référence qui tourne suivant une orientation qui peut être détectée par l'accéléromètre et les détecteurs d'angle (4) de façon à obtenir un signal de position brute pendant un laps de temps prédéterminé ;
• enregistrer le signal de position brute pendant ledit laps de temps prédéterminé;

**caractérisé en ce que** le procédé comprend en outre les étapes de :

• déterminer les paramètres d'un signal théorique modélisant le signal de position brute en fonction d'un modèle d'erreur prédéterminé, en l'absence de mouvement, de telle manière que le signal théorique est modélisé par une fonction polynomiale, le long de chaque axe, en fonction du temps ;
• calculer un signal résiduel entre le signal de modélisation théorique (Sr) et le signal de position brute ;
• identifier un mouvement parasite lorsque le signal résiduel dépasse un seuil limite prédéterminé (S1).

**2.** Procédé selon la revendication 1, dans lequel les paramètres sont déterminés à partir du signal de position brute en utilisant une méthode des moindres carrés.

**3.** Procédé selon la revendication 1, dans lequel les paramètres déterminés sont comparés à des seuils de vraisemblance qui sont établis en fonction des performances des détecteurs.

**4.** Procédé selon la revendication 1, dans lequel le seuil est calculé pour tenir compte d'une valeur d'écart type pour le bruit de l'accéléromètre et des détecteurs d'angle.

**5.** Procédé selon la revendication 4, dans lequel le seuil est égal à un multiple de la valeur d'écart type, et en particulier est égale à six fois la valeur d'écart type.

**6.** Procédé selon la revendication 4, dans lequel le seuil est constant.

**7.** Procédé selon la revendication 4, dans lequel le seuil varie en fonction du temps.

**8.** Procédé selon la revendication 1, comprenant l'étape de filtrer le signal de position brute préalablement à la modélisation afin d'en éliminer les éléments ayant une fréquence supérieure à un seuil maximum prédéterminé.

**9.** Procédé selon la revendication 1, dans lequel l'identification prend en compte le nombre de fois où le seuil limite a été dépassé par le signal résiduel.

# Fig.1

# Fig.2

Test sample [m]

## REFERENCES CITED IN THE DESCRIPTION

### Patent documents cited in the description

• FR 2925670 A1